# EUROPEAN PATENT APPLICATION

(11) **EP 3 018 559 A1**
(43) Date of publication of application: **11.05.2016**
(21) Application number: 14192214.6
(22) Date of filing: 07.11.2014
(51) Int. Cl.: G06F 3/01, H04M 11/10, G06F 3/0488

(54) **Handheld device with a slide switch displayed on a touch screen**

(71) Applicant: Speech Processing Solutions GmbH, 1100 Wien (AT)
(72) Inventor: Berger, Gerald, 2344 Maria Enzersdorf (AT)
(74) Representative: Schwarz & Partner

(57) **Abstract**

A handheld mobile device (1) that comprises processing means to process data and a touch-screen to display information and to input steering information to steer modes of operation of the device (1), which device (1) is built to display a slide switch (6) on the touch-screen (4) with at least two slide positions of the slide switch (6) aligned on a linear slide line (10) and each linked with a mode of operation of the device (1) and, that the device (1) comprises haptic feedback means and/or acoustic feedback means to provide feedback for the user about the change of mode of operation steered by the actual slide position.

## Description

### FIELD OF THE INVENTION

The present invention generally relates to a handheld mobile device that comprises processing means to process data and a touch-screen to display information and to input steering information to steer modes of operation of the device.

### BACKGROUND OF THE INVENTION

Handheld dictation devices on the market comprise a mechanical slide switch on the housing of the device a user can operate with his thumb to input steering information to steer recording and playback modes of operation of the device. Companies like Philips, Grundig and Olympus use such a slide switch on their dictation devices, but have different modes of operation linked to the slide positions of the slide switch.

Mobile phones like the iPhone enable the user to record and store audio and to playback stored audio data. Such mobile phones comprise a touch-screen to display information and to steer the mobile phone. Slide switches with two slide positions are used to switch particular features of the mobile phone on or off. The problem with such slide switches on touch-screen displays is that they are difficult to use for the user as he has to watch the display closely to see whether the slide switch changed its actual slide position and whether that resulted in a change of the mode of operation of the mobile phone.

### SUMMARY OF THE INVENTION

It is an object of the invention to provide a handheld device with a touch-screen which enables an intuitive use of a slide switch as known from mechanical slide switches. This object is achieved with a device that is built to display a slide switch on the touch-screen with at least two slide positions of the slide switch aligned on a linear slide line and each linked with a mode of operation of the device and, that the device comprises haptic feedback means and/or acoustic feedback means to provide feedback for the user about the change of mode of operation steered by the actual slide position.

Such a handheld device comprises the advantage, that the user can slide his finger along the touch screen in more or less the direction of the slide line and will get feedback from the device about the slide position of the slide switch and the mode of operation activated with such slide position without looking at the device. To provide haptic feedback the device could vibrate once every time the mode of operation of the device is changed by users input. The number of short vibrations and/or the duration of the vibrations could be linked to the mode of operation activated to enable the user to know exact which mode of operation has been activated by his input on the touch-screen. Tactile shaped displays known by the man skilled in the art of display technology could be used in the device to provide tactile feedback on the user's finger that slides along the touch-screen. Furthermore electric current stimulus of the user's finger by the touch-screen could be used as haptic feedback as well. Acoustic feedback could be given by any kind of beep or sound a mobile device can generate.

To avoid that a user who slides his finger on the touch-screen moves his finger too far and activates not only the next mode of operation linked to the neighboring slide position of the slide switch when he started the movement of the finger, it is advantageous that the user has to stop the movement first and then to start the movement of his finger again to activate the next mode of operation in the same direction of the movement. This is an additional help for the user to use the slide switch on the touch-screen without looking at the touch-screen.

A user may want to adopt the slide switch for his needs and wants to increase or decrease the number of slide positions of the slide switch. It is advantageous to use two fingers of the user, e.g. his forefinger and thumb in an opposed movement to change the number of slide positions.

A user could be used to a dictation machine of Philips with a mechanical slide switch and the way the modes of operations are linked to the different slide positions. In a configuration mode of the mobile device with a slide switch displayed on a touch-screen the user can link slide positions of the slide switch to modes of operation of the device. This helps the user to adopt the device to his personal needs.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figure 1 shows a mobile phone with a touch-screen that displays a slide switch and provides feedback.
Figure 2 on the left side shows the mobile phone of Figure 1 and on the right side with a decreased number of slide positions.
Figure 3 on the left side shows the mobile phone on the right side of Figure 2 and on the right side with an increased number of slide positions.
Figure 4 shows the mobile phone of Figure 1 with an additional mode of operation of the slide switch with four slide positions.
Figure 5 shows items displayed by the mobile phone of Figure 1 in a configuration mode.

### DETAILED DESCRIPTION OF EMBODIMENTS

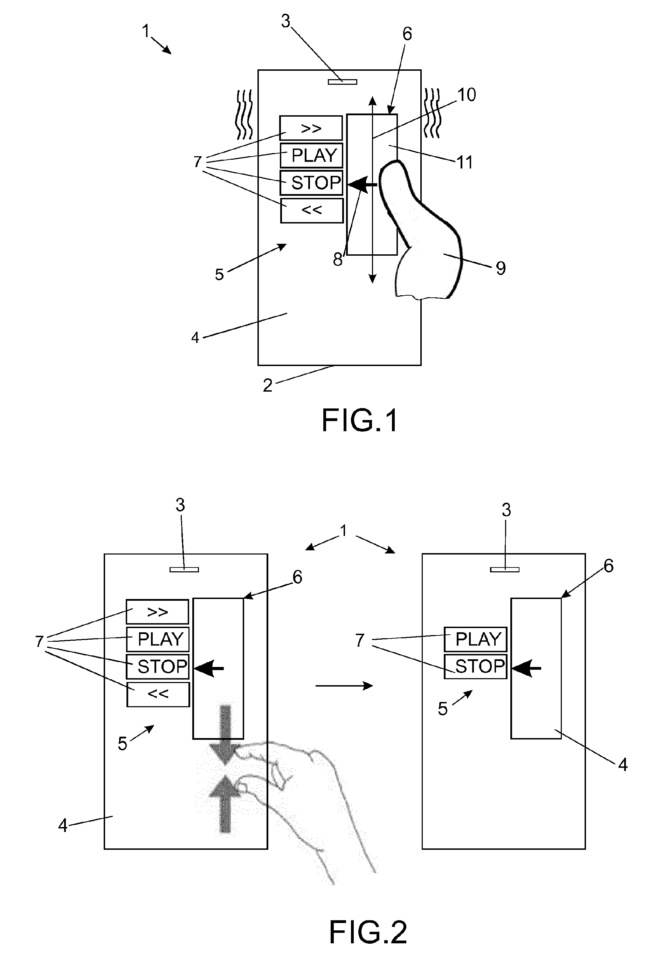

Figure 1 shows a mobile phone 1 as a handheld mobile recording device 1 that comprises a microphone 2 and processing means to process and store received audio data. The processing means are furthermore built to output stored audio data with a speaker 3. The mobile phone furthermore comprises a touch-screen 4 to display information 5 related to the audio data and to input steering information to steer modes of operation of the mobile phone 1 for recording and playback of the audio data.

The mobile phone 1 furthermore is built to display a slide switch 6 on the touch-screen 4. The slide switch 6 displayed on the mobile phone 1 comprises four slide positions and each slide position is marked with a label 7 displayed on the touch-screen 4. An arrow 8 on the slide switch 6 marks the actual slide position of the slide switch 6.

A user of the mobile phone 1 can use an object, like a pointer stick or one of his fingers to input steering information for the processing means with the touch-screen 4. A symbol of a thumb 9 of a user is shown in Figure 1 and the user can move his thumb 9 roughly along a linear slide line 10 to change the mode of operation of the mobile phone 1 with the slide switch 6. As shown in Figure 1, the arrow 8 marks the second slide position of the slide switch 6 and points to the label 7 linked to the STOP mode of operation of the audio recording and reproduction module of the mobile phone 1. The user may slide his thumb 9 upwards along the slide line 10 to activate the PLAY mode of operation or downwards along the slide line 10 to activate the REWIND mode of operation, symbolized by the symbol"<<".

The mobile phone 1 comprises haptic feedback means realized with a vibrator to provide feedback for the user about the change of mode of operation steered by the actual slide position. This has the advantage that the user can concentrate on his dictation and e.g. read on his computer, read another paper or examine a patient while he moves his thumb 9 upwards along the slide line 10 until the mobile phone vibrates to activate the PLAY mode of operation. If the user activates the WIND mode of operation, symbolized by the symbol ">>", the mobile phone vibrates e.g. several times until the user moves his thumb 9 downwards along the slide line 10 to activate the PLAY mode of operation again.

In another embodiment the device e.g. the mobile phone could give any kind of beep or type of sound linked to the mode of operation activated with the slide switch 6. This enables the user to use the slide switch 6 without the need to look at the touch-display to ensure the right mode of operation has been activated.

In another embodiment the device e.g. the mobile phone could comprise a tactile shape display as touch-screen, which tactile shape displays are known by the man skilled in the art of display technology. Such tactile shape displays for instance comprise a huge number of small parallel oriented bolts movable arranged within the tactile shape display. To provide tactile feedback one or more bolts in the area of one of the labels 7 would be moved a few tenths of millimeters out of the display plane.

In a further embodiment of the device e.g. the mobile phone could comprise a touch-display that enables to let flow a minimal amount of electric current through the user's finger to give feedback to the user if e.g. his finger is on one of the labels 7. A man skilled in the art of display technology is aware of such display technology. All these different kinds of feedback could be combined or used separate to provide the user feedback about the changes of the mode of operation steered by the actual slide position on the touch-screen.

The mobile phone 1 is built to change the actual slide position only in case a movement of an object, in particular a finger of the user is detected on the touch-screen 4 roughly along the slide line 10."Roughly" means that the user may run his finger a line that is up to e.g. 20 or 30 degrees inclined to the slide line 10. The movement of the finger 9 or object does not have to be in the area where the slide switch 6 is displayed on the touch-screen 4, but could be anywhere on the touch-screen 4 as long as the direction is roughly along the slide line 10. A movement of an object or finger 9 more or less cross the slide line 10 will not change the actual slide position of the slide switch 6. In a preferred embodiment the mobile phone 1 gives a haptic or acoustic feedback in a special way to give feedback to the user to change the slide direction to move the slide switch 6.

The mobile phone 1 furthermore is built to change the mode of operation only once, in case of a substantially continuous movement without a stop of an object, in particular a finger of the user on the touch-screen 4 roughly along the slide line 10 across at least two slide positions is detected. This is to avoid that the user runs too fast with his finger over the slide position of the mode of operation he wants to activate and faulty activates the next mode of operation. As shown in Figure 1 the mobile phone 1 is in the STOP mode of operation. The user may simply slide his thumb 9 upwards until he gets vibration feedback that the PLAY mode of operation has been activated to activate the playback of stored audio data. Even if he continues his movement of the thumb 9 after the vibration feedback the mobile phone will not change the mode of operation into the WIND mode of operation as he did not stop his movement after the vibration feedback. This enables a very easy and secure use of the slide switch 6.

For some use cases the user of the mobile phone 1 may want to reduce or increase the number of slide positions of the slide switch 6 displayed on the touch-screen 4. The user may for instance decide to only use the PLAY and STOP mode of operation. To achieve the reduction of slide positions, the user only has to do an approaching movement with his fingers or other objects at the same time on the touch-screen 4, as shown in Figure 2 on the left side. After this movement with the fingers on the touch-screen 4, a slide switch 6 with less slide positions e.g. only two slide positions as shown in Figure 2 right, will be active for the users input.

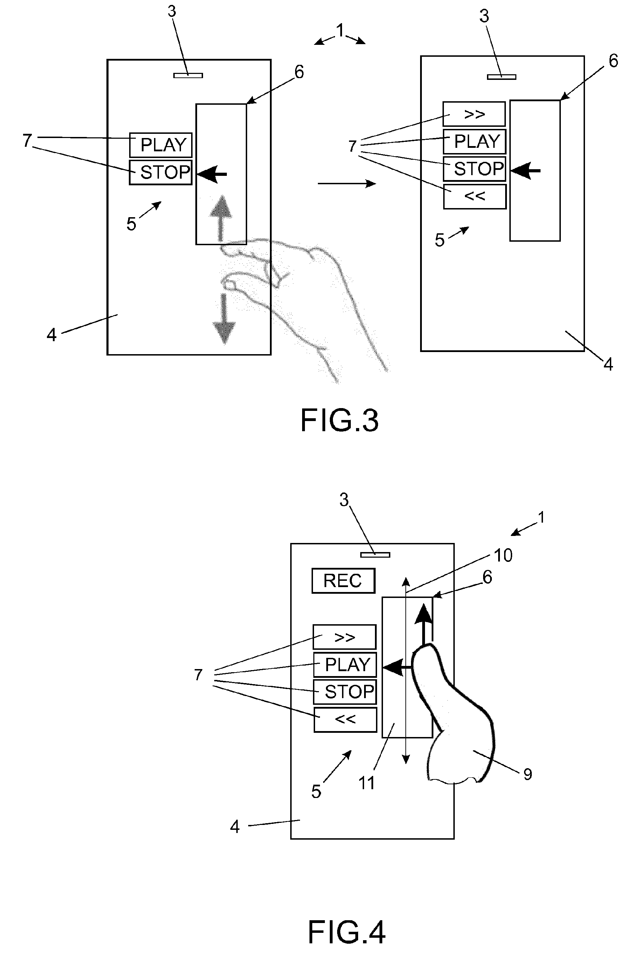

If on the other hand the user wants to increase the number of slide positions of the slide switch 6 displayed on the touch-screen 4, the user only has to do a departing movement with his fingers or other objects at the same time on the touch-screen 4, as shown in Figure 3 on the left side. After this movement with the fingers on the touch-screen 4, a slide switch 6 with more slide positions e.g. four slide positions as shown in Figure 3 right, will be active for the users input. With these opposed movements of two fingers or object the user can change very easily the number of slide positions of the slide switch displayed on the touch-screen 4. In another embodiment a slide switch with three or five or even six or seven slide positions could be activated to be displayed, what would be advantageous for some particular use cases.

The mobile phone 1 furthermore is built to change the mode of operation into one additional mode, the number of slide positions exceeding by one, in case of a substantially continuous movement without a stop of an object, in particular a finger of the user on the touch-screen 4 roughly along the slide line 10 with a speed of the movement exceeding a mode activation speed is detected. The mobile phone 1 as shown in Figure 4 is in PLAY mode of operation when the user recognizes that he immediately needs to start the RECORD mode of operation to capture and store valuable audio data. The slide switch 6 only has four slide positions and none of these will activate the RECORD mode of operation. Advantageously the mobile phone 1 is built to detect a movement of an object or finger of the user that is faster than a mode activation speed and based on such detection the mobile phone 1 activates an additional mode of operation. The mobile phone 1 has been configured that this additional mode of operation is the RECORD mode of operation and therefore the user simply can move his thumb 9 upwards fast to activate the RECORD mode of operation at any time. Another additional mode of operation could be realized in case a movement that is faster than the mode activation speed of a finger or object in the opposite direction downwards roughly along the slide direction 10 would be detected.

The mobile phone 1 furthermore is built to decrease the speed of the button 11 of the slide switch 6 displayed on the touch-screen 4, although a substantially continuous movement of an object, in particular a finger of the user on the touch-screen 4 roughly along the slide line 10 is detected, close to a new slide position and until the mode of operation steered by the actual slide position has been changed. This provides a visual feedback with a decreased speed of the button 11 for the user when approaching a new slide position to activate the mode of operation linked to the slide position in the direction of the movement of the thumb 9. As shown in Figure 4 the actual slide position is at the PLAY mode of operation and if the user moves his thumb 9 upwards along the slide line 10 with continuous speed the button 9 displayed will reduce its speed, like if it has to be pushed up a hill, until the actual slide position is the WIND mode of operation. This additional optical feedback helps the user to easily adjust the slide switch 6 to activate the mode of operation he wants to activate.

The mobile phone 1 furthermore comprises a spring back mode of operation, which means that the mode of operation is changed back to the neighboring slide position of the slide switch 6 as soon as the object, in particular a finger of the user is not detected any more on the touch-screen 4. The actual slide position of the mobile phone 1 displayed in Figure 4 is the PLAY mode of operation and if the user wants to activate the WIND mode of operation he just moves his thumb upwards along the slide line 10 until he gets the vibration feedback that the WIND mode of operation has been activated. To avoid, that the user activates the WIND mode of operation unintentionally too long and moves the playback position within the audio data to a far away time instance or counter position within the audio data, the WIND mode is a spring back mode of operation. As long as the user keeps his thumb 9 without movement on the touch-screen 4 the mobile phone 1 will activate the WIND mode, but will change back to the PLAY mode of operation at the neighboring slide position as soon as the user removes his thumb 9 from the touch-screen 4.

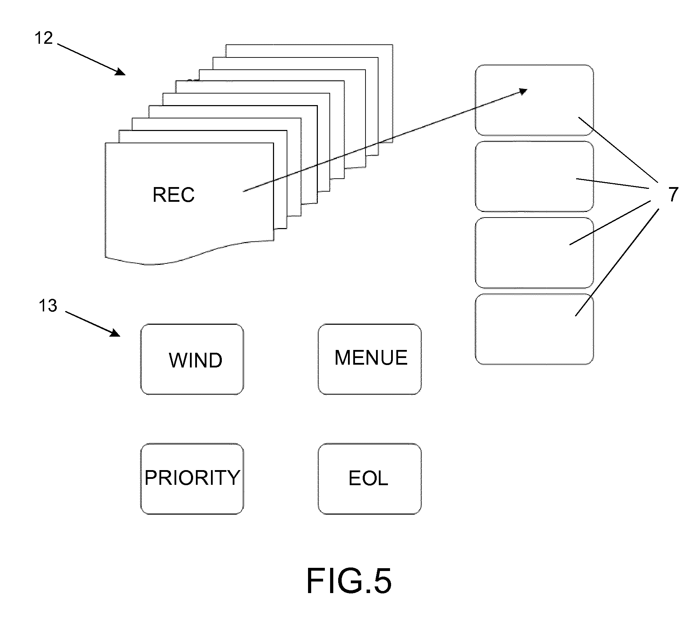

The mobile phone 1 furthermore comprises a configuration mode that enables to link slide positions of the slide switch 6 and single buttons to modes of operation of the mobile phone 1. In the configuration mode the mobile phone 1 displays items 12 of possible modes of operation of the mobile phone 1, which items 12 may be moved onto a label 7 of the slide switch 6. If for instance as shown in Figure 5 the REC item 12 is moved onto the most upward located label 7, then the RECORD mode of operation will be activated each time the actual slide position is the slide position of the top button of the slide switch 6. This helps the user to configure the slide switch 6 to his own needs. Further normal single buttons 13 may be configured in this configuration mode as well with other items 12. After configuration the buttons 13 will display text or numbers as symbols for the modes of operation to be activated with these buttons 13 as configured.

A handheld mobile device may be any handheld device like e.g. a smart phone or a tablet that is capable to capture and store audio and equipped with a touch screen. The orientation of the slide switch displayed on the touch-screen and linked to that linear slide line may be inclined at any angle in relation the housing of the device. This angle may be adjustable for the user in configuration mode to adopt the device to the needs of the user. A slide switch with haptic and/or acoustic feedback means as described may be used to steer a scrolling mode to scroll within a text stored in a text display device like a tablet or e-book. The slide positions could be used for fast upwards scrolling / slow upwards scrolling / Stop / slow downwards scrolling / fast downwards scrolling.

The handheld mobile device furthermore could be a device capable to download software or an App from a server linked to the Internet into the memory of the device. Such software or App is a computer program product to be downloaded via a network onto the device. After download the App would be processed by the device which enables the device to generate haptic and/or acoustic feedback about the change of mode of operation steered by the actual slide position.

A slide switch 6 according to the invention can have any kind of design. The slide switch 6 according to the figures just has an arrow 8 to mark the label 7 which slide position and mode of operation of the device is selected by the slide switch 6. In another embodiment of the slide switch the text or icon which mode of operation is selected by the slide switch could be for instance designed into the area of the slide switch.

Such device that processes the App realizes a method to steer modes of operation of the device that comprises at least a touch-screen. A user may slide an object or his finger along the touch-screen that displays a slide switch with at least two slide positions of the slide switch aligned on a linear slide line and each linked with a mode of operation of the device. The user will receive haptic feedback and/or acoustic feedback from the device about the change of mode of operation steered by the actual slide position.

Such device could be linked via e.g. a cable or Bluetooth to a headset that comprises a speaker and a microphone. Such device could store audio captured with the microphone in the headset or store photos or video captured with a camera linked to the device via Bluetooth as well.

## Claims

1. Handheld mobile device (1) that comprises processing means to process data and a touch-screen (4) to display information and to input steering information to steer modes of operation of the device (1) **characterized in, that**
the device (1) is built to display a slide switch (6) on the touch-screen (4) with at least two slide positions of the slide switch (6) aligned on a linear slide line (10) and each linked with a mode of operation of the device (1) and, that
the device (1) comprises haptic feedback means and/or acoustic feedback means to provide feedback for the user about the change of mode of operation steered by the actual slide position.

2. Device (1) according to claim 1 that comprises a microphone (2) and the processing means are built to process and store received audio data and to output stored audio data with a speaker (3), which touch-screen (4) is built to display information (5) related to the audio data and to input steering information to steer modes of operation of the device (1) for recording and/or playback of the audio data.

3. Device (1) according to claim 1 or 2, wherein the device (1) is built to change the actual slide position only in case a movement of an object, in particular a finger (9) of the user is detected on the touch-screen (4) roughly along the slide line (10).

4. Device (1) according to any of the proceeding claims, wherein the device (1) is built to change the mode of operation only once, in case of a substantially continuous movement without a stop of an object, in particular a finger (9) of the user on the touch-screen (4) roughly along the slide line (10) across at least two slide positions to change the mode of operation twice is detected.

5. Device (1) according to any of the proceeding claims, wherein the device (1) is built to change the number of slide positions of the displayed slide switch (6) in case opposed movements of two objects, in particular fingers of the user on the touch-screen (4) roughly along the slide line (10) are detected.

6. Device (1) according to claim 5, wherein the device (1) is built to increase the number of slide positions of the displayed slide switch (6) in case departing movements of two objects, in particular fingers of the user on the touch-screen (6) roughly along the slide line (10) are detected.

7. Device (1) according to claim 5, wherein the device (1) is built to decrease the number of slide positions of the displayed slide switch (6) in case approaching movements of two objects, in particular fingers of the user on the touch-screen (4) roughly along the slide line (10) are detected.

8. Device (1) according to any of the proceeding claims, wherein the device (1) is built to change the mode of operation into one additional mode, the number of slide positions of the slide switch (6) exceeding by one, in case of a substantially continuous movement without a stop of an object, in particular a finger (9) of the user on the touch-screen (4) roughly along the slide line (10) with a speed of the movement exceeding a mode activation speed is detected.

9. Device (1) according to any of the proceeding claims, wherein the device (1) is built to decrease the speed of the button (11) of the slide switch (6) displayed on the touch-screen (4), although a substantially continuous movement of an object, in particular a finger (9) of the user on the touch-screen (4) roughly along the slide line (10) is detected, close to a new slide position and until the mode of operation steered by the actual slide position has been changed.

10. Device (1) according to any of the proceeding claims, wherein the device (1) comprises a spring back mode of operation which is changed back to the mode of operation of the neighboring slide position of the slide switch (6) as soon as the object, in particular a finger (9) of the user is not detected any more on the touch-screen (4).

11. Device (1) according to any of the proceeding claims, wherein the device (1) comprises a configuration mode that enables to link slide positions of the slide switch (6) to modes of operation of the device (1).

12. Device according to any of the proceeding claims, wherein the touch-screen is realized as tactile shape display and/or as display with electric current stimulus.

13. Computer program product to be downloaded via a network onto a device (1) according to any of the claims 1 to 12 which computer program product processed by the device (1) is built to enable the device (1) to generate haptic and/or acoustic feedback about the change of mode of operation steered by the actual slide position.

14. Computer program product according to claim 13 wherein the feedback is realized by one or more of the following group of feedback: haptic feedback in the form of vibration and/or tactile feedback for the finger and/or electric current stimulus and/or acoustic feedback.

15. Method to steer modes of operation of a device (1) with a touch-screen **characterized in, that**
a user slides an object, in particular a finger (9) along the touch-screen that displays a slide switch (6) with at least two slide positions of the slide switch (6) aligned on a linear slide line (10) and each linked with a mode of operation of the device (1) wherein the user receives haptic feedback and/or acoustic feedback from the device about the change of mode of operation steered by the actual slide position.
